(19) Europäisches Patentamt
European Patent Office
Office européen des brevets

(11) Veröffentlichungsnummer: **0 322 526**
**A2**

(12) # EUROPÄISCHE PATENTANMELDUNG

(21) Anmeldenummer: 88117281.1

(51) Int. Cl.4: **F16C 11/06**

(22) Anmeldetag: 18.10.88

(30) Priorität: 29.12.87 DE 8717043 U

(43) Veröffentlichungstag der Anmeldung:
05.07.89 Patentblatt 89/27

(84) Benannte Vertragsstaaten:
AT BE CH DE ES FR GB GR IT LI LU NL SE

(71) Anmelder: VEREINIGTE ALUMINIUM-WERKE
AKTIENGESELLSCHAFT
Georg-von-Boeselager-Strasse 25
D-5300 Bonn 1(DE)

(72) Erfinder: Krüger, Gerhard, Dipl.-Ing.
Réaumurstrasse 106
D-5300 Bonn 1(DE)

(54) Kugelgelenkgehäuse, insbesondere für Fahrzeugstreben.

(57) Zur Zeit werden Fahrzeugstreben, in denen Kugelgelenke schräg zur Strebenlängsachse eingebaut werden sollen, in Schmiedetechnik hergestellt. Dabei wird das Gehäuse für das Kugelgelenk in gewünschtem Winkel angeschmiedet. Nun soll die Fahrzeugstrebe im Strangpreßverfahren hergestellt werden und den Einbau eines Kugelgelenkgehäuses im vorbestimmten Winkel ermöglichen.

Hierzu weist das Kugelgelenkgehäuse zwei Bohrungen (1, 2) auf, die von einander gegenüberliegenden Seiten des Gehäuses nach innen verlaufen und im Gehäuseinneren unter einem Winkel α ineinander übergehen, wobei die Außenfläche des Gehäuses im Übergangsbereich der Bohrungen eine kragenförmige umlaufende Zentrier- und Anschlagfläche (4) aufweist und die Gehäusewandung zur Öffnungsseite von Bohrung (1) eine umlaufende Einkerbung (16) aufweist, die in zwei ringförmigen Ansatzstücken (5, 6) zur Befestigung an der Fahrzeugstrebe (10) bzw. der Gelenkschale (13) mündet.

Das Kugelgelenkgehäuse eignet sich für alle Fahrgestelle im Fahrzeugbau.

Fig. 1

EP 0 322 526 A2

## Kugelgelenkgehäuse, insbesondere für Fahrzeugstreben

Die vorliegende Erfindung betrifft ein Kugelgelenkgehäuse, insbesondere für Fahrzeugstreben, mit einer äußeren Zentrierfläche für den Einbau in die Fahrzeugstrebe und einer Aufnahmefläche für die Gelenkschale.

Ein Kugelgelenkgehäuse der eingangs genannten Art ist aus DE-PS 33 15 658 bekannt. Zur Zeit werden Fahrzeugstreben aus Aluminium bzw. Aluminiumlegierungen, in denen Kugelgelenke schräg zur Strebenlängsachse eingebaut werden sollen, in Schmiedetechnik hergestellt. Dabei wird das Gehäuse für das Kugelgelenk in gewünschtem Winkel angeschmiedet. Nach neueren Entwicklungen werden Fahrzeugstreben aus Strangpreßprofilen hergestellt. Die Streben werden durch parallele Schnitte aus dem Profilstrang herausgeschnitten. In diesem Fall steht keine ausreichende Materialmenge zum Anformen des Gehäuses zur Verfügung. Dies gilt insbesondere dann, wenn die Streben relativ flach sind.

Um das notwendige Material zur Verfügung zu stellen, müßten die Streben keilförmig aus dem Strang geschnitten werden. Allerdings entsteht dann bei der spanenden Bearbeitung eine erhebliche Menge an Materialabfall in Form von Spänen.

Aufgabe der vorliegenden Erfindung ist es, den einfachen Einbau eines Kugelgelenkes in einer im Strangpreßverfahren hergestellten, flachen Fahrzeugstrebe unter einem vorbestimmten Winkel zu ermöglichen.

Erfindungsgemäß wird diese Aufgabe durch ein Gehäuse mit den Ausbildungsmerkmalen nach dem Kennzeichen des Schutzanspruch 1 gelöst.

Die Erfindung wird nachfolgend anhand des in der Zeichnung dargestellten Ausführungsbeispieles erläutert. Es zeigen:

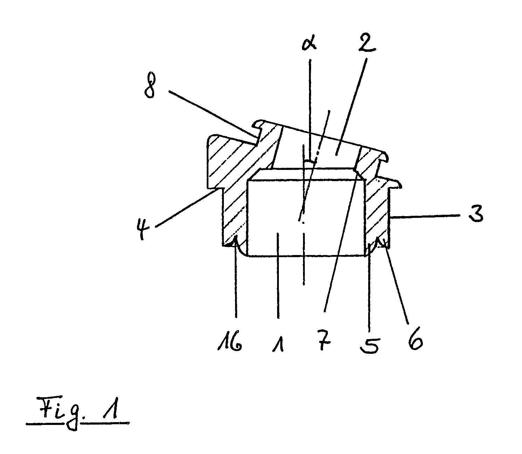

Fig. 1 = ein erfindungsgemäßes Gehäuse im Schnitt,

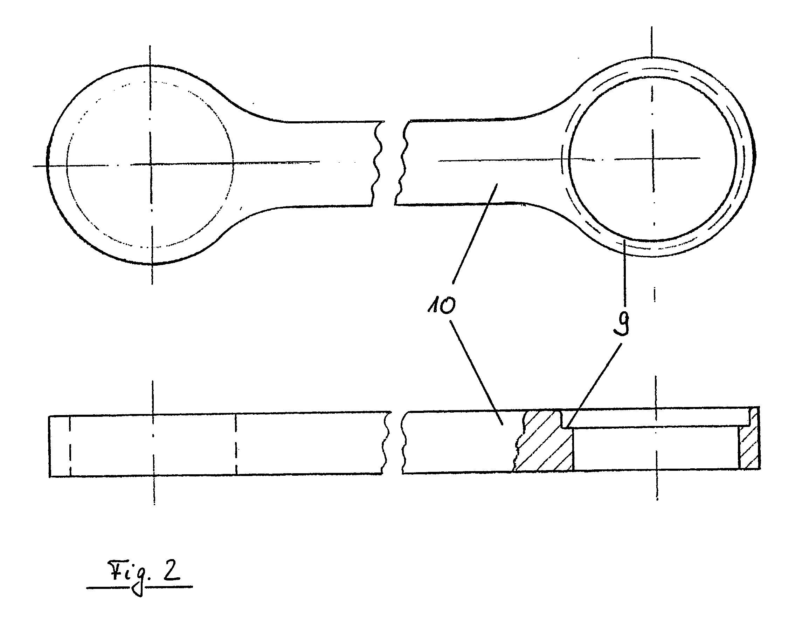

Fig. 2 = eine Fahrzeugstrebe zum Einbau des Gehäuses,

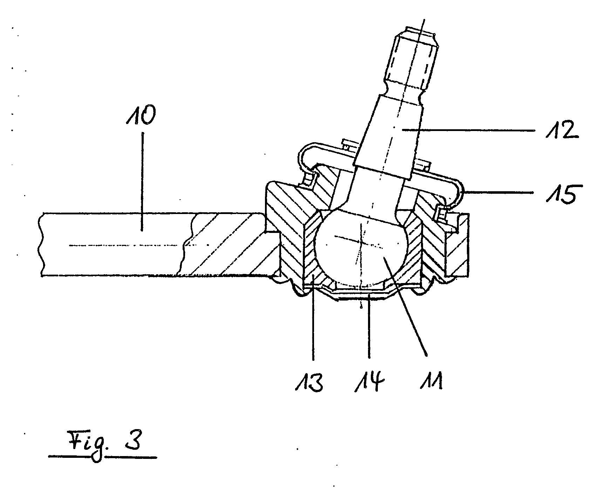

Fig. 3 = das Gehäuse nach Fig. 1 mit Kugelgelenk, eingebaut in eine Fahrzeugstrebe nach Fig. 2.

Das erfindungsgemäße Gehäuse weist zwei zylindrische Bohrungen 1, 2 auf, die von zwei einander gegenüberliegenden Seiten des Gehäuses nach innen verlaufen und im Gehäuseinneren ineinander übergehen. Die Achsen der beiden Bohrungen 1, 2 sind unter dem Winkel $\alpha$ gegeneinander geneigt. Dieser Winkel $\alpha$ wird bestimmt durch die gewünschte Ruhestellung des Gelenkzapfens 12. Er beträgt 13-18 Grad, vorzugsweise 15 Grad.

Bohrung 1 dient zur Aufnahme der Gelenkschale 13 mit dem Kugelkopf 11. Am Übergang zur Bohrung 2 ist Bohrung 1 konisch verjüngt. Die Innenfläche 7 des konischen Teils der Bohrung 1 bildet den Anschlag für die Gelenkschale 13.

Die Außenfläche 3 der Gehäusewandung verläuft konzentrisch um Bohrung 1. Sie greift formschlüssig in das Auge der Strebe 10 ein. Zum mittleren Bereich des Gehäuses wird die Außenfläche 3 begrenzt durch den umlaufenden Kragen 4. In Einbaustellung liegt der Kragen 4 auf dem umlaufenden Absatz 9 im Auge der Strebe auf.

Auf der Öffnungsseite von Bohrung 1 weist die Gehäusewandung eine umlaufende Einkerbung 16 auf. Dadurch werden zwei ringförmige Ansatzstücke 5, 6 gebildet. Das äußere Ansatzstück 6 wird nach Einbau des Gehäuses in die Strebe 10 auf dem gesamten Umfang nach außen gerollt. Das Gehäuse wird dadurch form- und kraftschlüssig mit der Strebe verbunden. Nach dem Einsetzen des Kugelgelenkes wird das innere Ansatzstück 5 über den Verschlußdeckel 14 des Gelenkes nach innen gerollt. Das Kugelgelenk wird so fest mit dem Gehäuse verklammert.

Bohrung 2 bildet die Durchführung für den Gelenkzapfen 12 des Kugelgelenkes. Der Durchmesser von Bohrung 2 wird so gewählt, daß der Gelenkzapfen 12 um vorzugsweise 15 Grad in jede Richtung von der Ruhestellung aus geschwenkt werden kann. Die Gehäusewand weist im Bereich der Bohrung 2 eine umlaufende Nut 8 auf, in der die Dichtungsmanschette 15 des Kugelgelenkes befestigt wird.

Diese Ausgestaltung erlaubt es, das Gehäuse senkrecht im Auge der Strebe fest zu verankern. Gleichzeitig kann das Kugelgelenk so eingebaut werden, daß die Ruhestellung des Gelenkzapfens im gewünschten Winkel zur Strebenlängsachse liegt. Materialabfall in Form von Spänen entsteht nicht. Das Gehäuse selbst kann aus jeder Al-Knetlegierung bestehen, vorzugsweise wird es aus einer Aluminiumlegierung vom Typ AlMn, AlMg oder AlZnMg kaltfließgepreßt.

## Ansprüche

1. Kugelgelenkgehäuse, insbesondere für Fahrzeugstreben, mit einer äußeren Zentrierfläche für den Einbau in die Fahrzeugstrebe und einer Aufnahmefläche für eine Gelenkschale, dadurch gekennzeichnet, daß das Gehäuse zwei Bohrungen (1, 2) aufweist, die von einander gegenüberliegenden Seiten des Gehäuses nach innen verlaufen und im Gehäuseinneren unter einem Winkel $\alpha$ ineinander übergehen, wobei die Außenfläche des Gehäuses im Übergangsbereich der Bohrungen eine kragenförmige umlaufende Zentrier- und Anschlagfläche (4) aufweist und die Gehäusewandung zur Öffnungsseite von Bohrung (1) eine umlaufende Einkerbung (16) aufweist, die in zwei ringförmigen Ansatzstücken (5, 6) zur Befestigung an der Fahrzeugstrebe (10) bzw. der Gelenkschale (13) mündet.

2. Gehäuse nach Anspruch 1, dadurch gekennzeichnet, daß der Winkel α 13 - 18 Grad beträgt.

3. Gehäuse nach einem der vorhergehenden Ansprüche, dadurch gekennzeichnet, daß die Bohrung (1) am Übergang der Bohrrungen (1, 2) konisch zuläuft.

4. Gehäuse nach einem der vorhergehenden Ansprüche, dadurch gekennzeichnet, daß das Gehäusematerial eine Aluminiumlegierung vom Typ AlMn, AlMg oder AlZnMg ist.

Fig. 1

Fig. 2

10

12

15

13 14 11

Fig. 3